# EUROPEAN PATENT APPLICATION

(11) **EP 2 485 367 A2**
(43) Date of publication of application: **08.08.2012**
(21) Application number: 12153207.1
(22) Date of filing: 31.01.2012
(51) Int. Cl.: H02K 1/18

(54) **Rotary Electric Machine**

(30) Priority: 04.02.2011 JP 2011022545
(71) Applicant: Honda Giken Kogyo Kabushiki Kaisha, Tokyo 107-8556 (JP); Mitsuba Corporation, Kiryu-shi, Gunma 376-8555 (JP)
(72) Inventor: Nemoto, Hirotomi, Wako-shi, Saitama 3510193 (JP); Kaihatsu, Akihiro, Kiryu-shi, Gunma 3768555 (JP); Tozuka, Yosuke, Kiryu-shi, Gunma 3768555 (JP)
(74) Representative: Faulkner, Thomas John

(57) **Abstract**

[Theme] To arrange a stator that makes up a rotary electric machine to be of a divided type while making integration of divisions easy and preventing compromising of a magnetic path formed in the stator.

[Solution Means] A plurality of plate-like stator cores 18 that form a stator 10 are each constructed from an annular fixed portion 19 and T-shaped portions 20 each formed to T-shapes by a leg piece 20a and a T-shaped portion bar piece 20b, base end portions of the T-shaped portion leg pieces 20a are fitted to and integrated with a plurality of recessed grooves 19b recessedly formed in the fixed portion 19, notches 19f and 20e that become circular in shape when the fitting is performed are respectively formed at arbitrary locations of fitting portions of the fixed portion 19 and the T-shaped portions 20, and in the notches 19f and 20e that become communicating cylindrical holes when the fixed portions 19 and the T-shaped portions 20 are laminated in plurality and fitted together, fixing pins 21 having outer diameters slightly greater than diameters of the cylindrical holes are press-fitted.

## Description

### [Technical Field]

The present invention relates to a technical field of a rotary electric machine for constructing a vehicle-mounted actuator, etc.

### [Background Art]

In general, a stator of a rotary electric machine, such as an electric motor, etc., is constructed by laminating a plurality of stator cores, made of a metal plate material, in a motor axis direction. Among such stators, there are those with which each stator core is divided into a plurality of parts, the divided divisions are laminated according to each division, and the respective laminated divisions are connected to each other in an abutted manner. Among such stators, there has been proposed an arrangement in which each stator core is constructed from divided fixed portions, divided in plurality in a circumferential direction, and T-shaped portions, each formed of a leg piece extending in a radial direction from each fixed portion and a T-shaped portion bar piece extending in the circumferential direction from an end portion of extension of the leg piece, and where the plurality of divided fixed portions and the plurality of T-shaped portions are laminated in plurality according to each division, the respectively laminated divided fixed portions are fitted to an annular form, and base portions of the laminated T-shaped portions are respectively fitted in recessed portions formed in inner peripheries of the divided fixed portions to form a stator in which the divided fixed portions and the T-shaped portions are connected integrally.

### [Prior Art Document(s)]

### [Patent Document(s)]

[Patent Document 1] Japanese Published Unexamined Patent Application No. 2010-75027

### [Summary of the Invention]

### [Problem to be Solved by the Invention]

However, with the conventional arrangement described above, the stator is formed by performing a step of fitting the plurally laminated divided fixed portions to each other and a step of fitting the base portions of the plurally laminated T-shaped portions to the recessed portions of the respective divided fixed portions, and there are thus many fitting locations that make a work of forming the stator complicated, and moreover, at each fitting location, integration is achieved by simply fitting together without providing a separate integrating means and thus a fitting work is difficult and poor in workability.
Furthermore, in a case where dimensional errors arise and gaps form at the respective fitting portions of the stator, a magnetic path that forms in the stator may be interrupted and made non-uniform in the circumferential direction by the gaps even when the gaps are slight, and in such a situation, variation of motor characteristics occurs and give rise to torque ripple and generation of vibration and abnormal noise. Although the respective fitting portions must thus be made high in dimensional precision, this makes the fitting work even more difficult and raises costs and herein lie the problems to be solved by the present invention.

### [Means for Solving the Problem(s)]

The present invention has been made with the object of solving the above problems in view of the above circumstances, and a first aspect of the present invention provides a rotary electric machine where a plurality of plate-like stator cores that form a stator of the rotary electric machine are each constructed from an annular fixed portion and T-shaped portions each formed to a T-shape by a leg piece and a T-shaped portion bar piece, base end portions of the T-shaped portion leg pieces are fitted to and integrated with a plurality of recessed grooves recessedly formed in the fixed portion, notches, that become circular in shape when the fitting is performed, are respectively formed at arbitrary locations of fitting portions of the fixed portion and the T-shaped portions, and in the notches that become communicating cylindrical holes when the fixed portions and the T-shaped portions are respectively laminated in plurality and then fitted together, fixing pins having outer diameters slightly greater than diameters of the cylindrical holes are press-fitted to integrate the fixed portions and the T-shaped portions.*
A second aspect of the present invention provides the rotary electric machine according to the first aspect where each recessed groove of the fixed portion making up a fitting portion has a pair of side pieces facing each other in a circumferential direction, the side pieces are abuttingly fitted to a pair of side pieces in the circumferential direction that form the leg piece of a T-shaped portion, the notches are formed mutually in the respective side pieces at one side in the circumferential direction of the recessed groove and the leg piece, and the side pieces at the other side in the circumferential direction are mutually pressure-welded by the press-fitting of the fixing pin into the notches.
A third aspect of the present invention provides the rotary electric machine according to the first or second aspect where the stator is supported by a flat plate-like housing and pin supporting penetrating holes allowing penetration and support of end portions of the press-fitted fixing pins are opened in the housing.
A fourth aspect of the present invention provides the rotary electric machine according to the third aspect where a rotor shaft penetrating hole that axially supports a rotor shaft that forms a rotor of the rotary electric machine is opened in the housing.

### [Effect(s) of the Invention]

By the first aspect of the invention, even though the stator is of a divided type that is made up of fixed portions and T-shaped portions, the fitting work is made easy, integration can be achieved with good workability, and a contribution can be made to cost reduction.
By the second aspect of the invention, each fixed portion is put in contact with the respective T-shaped portions reliably at the same locations so that a magnetic path that is formed through the respective T-shaped portions can be formed uniformly, thereby enabling torque ripple to be reduced and an electric motor that is low in vibration and abnormal noise to be provided.
By the third aspect of the invention, an assembly work can be simplified and the fixing pins can be used as members for integrating the divided fixed portions and T-shaped portions and as members for positioning the stator with respect to a base plate, thereby enabling shared use of members.
By the fourth aspect of the invention, the stator and the rotor can be assembled together with high axial center precision and in an easily positioned state, thereby making the assembly work easy and enabling realization of excellent motor characteristics.

### [Brief Description of the Drawings]

[FIG. 1] FIGS. 1A and 1B are a perspective view of an actuator and a schematic plan view for explaining principal portions of the actuator, respectively.
[FIG. 2] FIGS. 2A and 2B are a front view and a rear view, respectively, of principal portions.
[FIG. 3] FIG. 3 is an exploded perspective view of the actuator.
[FIG. 4] FIG. 4 is a perspective view of a stator.
[FIG. 5] FIG. 5 is an exploded perspective view for explaining an assembly procedure of a stator assembly.
[FIG. 6] FIG. 6 is a perspective view of a stator according to a second embodiment of the present invention.

### [Mode(s) for Carrying Out the Invention]

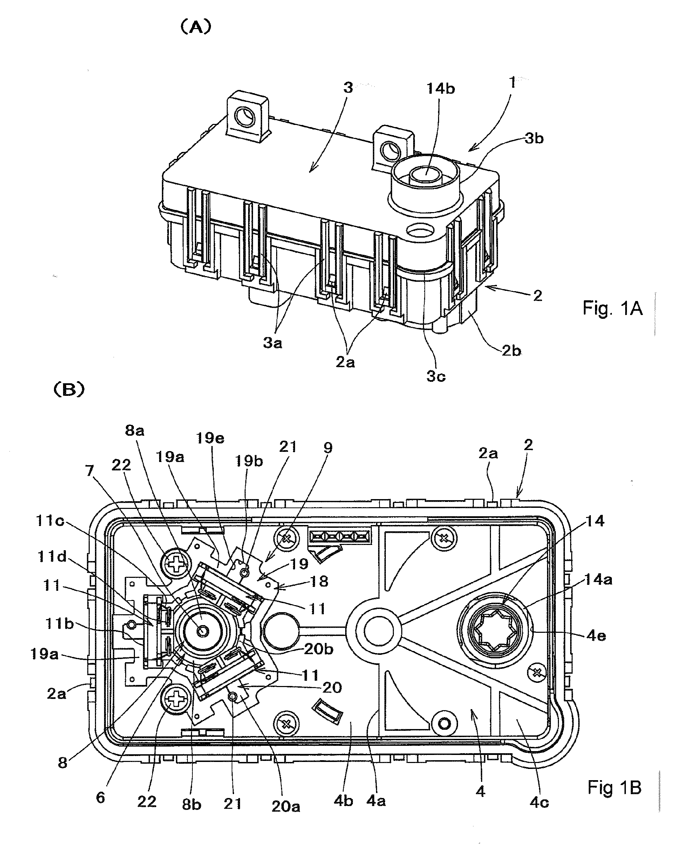

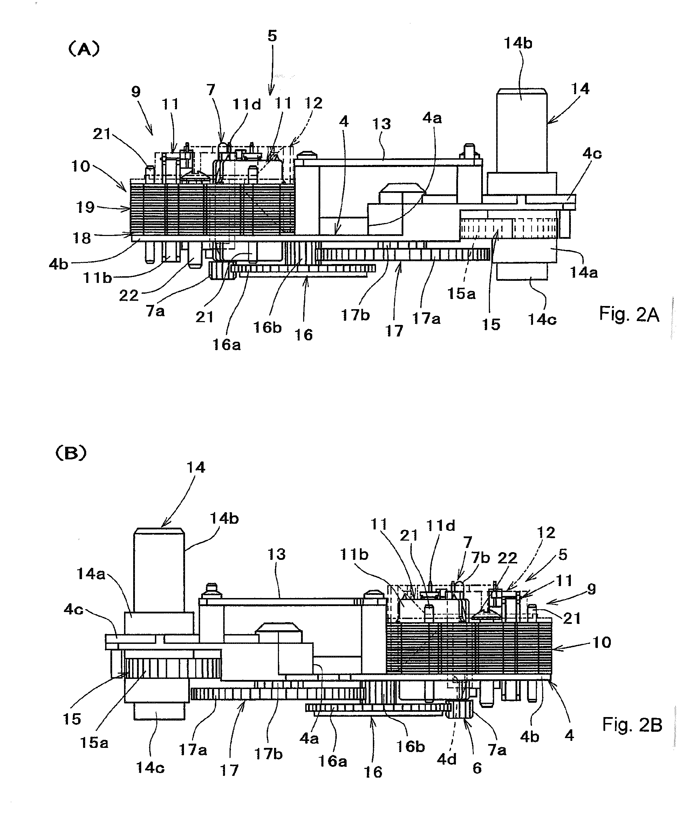

A first embodiment of the present invention shall now be described based on the drawings.
In the figures, 1 is an actuator disposed in a vehicle and the actuator 1 is interlockingly connected to an opening/closing body (not shown) that opens and closes a front grille and is arranged to open and close the front grille by swingingly displacing the opening/closing body in a predetermined angular range (of substantially 90 degrees).
As shown in FIG. 1, the actuator 1 includes a box-like case body 2 that is open at an upper side and has a predetermined depth, and a box-like cover body 3 that is open at a lower side and has a predetermined depth. The cover body 3 abuttingly covers and is made integral with the case body 2, a base plate 4 (corresponding to a housing of the present invention) is supportingly fixed between the case body 2 and the cover body 3 and partitions a space, formed between the case body 2 and the cover body 3, into two spaces in a vertical direction. As shown in FIG. 2, the base plate 4 is divided, via a step portion 4a at an intermediate portion in a longitudinal direction, into a one-side portion 4b (at a left side in FIG. 2A) and an other-side portion 4c, and the one-side portion 4b is formed to be disposed at a lower position than the other-side portion 4c. An electric motor 5 is disposed at the one-side portion 4b of the base plate 4.
The case body 2 and the cover 3 are lockingly and sealingly integrated by latching of a plurality of latching projections 3a, extending downward from side pieces at four sides making up the cover body 3, with a plurality of latch receiving pieces 2a formed at side pieces at four sides making up the case body 2.

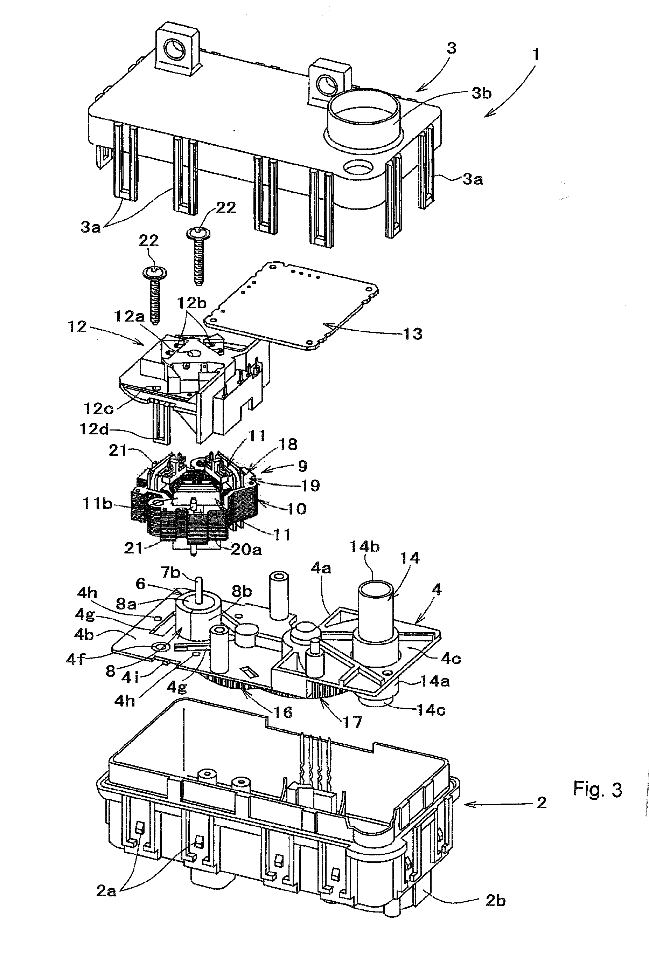

As shown in FIGS. 1B and 3, a rotor unit (corresponding to a rotor of the present invention) 6 making up the electric motor 5 includes a rotor shaft 7 and a rotor main body 8, and the rotor main body 8 is constructed from a cylindrical core 8a externally fitted to the rotor shaft 7 in an anti-rotation manner and a pair of arcuate permanent magnets 8b fixed to an outer peripheral surface of the core 8a. The rotor unit 6 has its permanent magnet 8b mounted portion supported rotatably in a state of being disposed above the base plate 4 by a lower end portion of the rotor shaft 7, which projects downward from a lower end surface of the rotor main body 8, being axially supported via a bearing (not shown) assembled to a rotor shaft penetrating hole 4d opened in advance in a positioned manner in the one-side portion 4b of the base plate 4. An output gear 7a is disposed integrally (in an anti-rotation manner) at the lower end portion of the rotor shaft 7 that projects below the base plate 4 (one-side portion 4b).

Furthermore, although a stator assembly 9 is disposed at an outer periphery of the rotor unit 6, the stator assembly 9 includes a stator 10 and coil units 11 assembled to an inner radial side of the stator 10 and is fixed to the base plate 4 in a state where an inner periphery of the stator assembly 9 that is to be the coil unit 11 mounted portions is externally fitted in close proximity to an outer peripheral surface of the rotor main body 8 (permanent magnets 8b) of the rotor unit 6, and detailed arrangements of these components shall be described later.

Furthermore, 12 is a motor cover, and the motor cover 12 is installed so as to cover upper sides of the rotor unit 6 and the stator assembly 9 as shown in FIGS. 2 and 3. The motor cover 12 has formed thereon a rotor shaft supporting portion 12a that axially and rotatably supports an upper end portion 7b of the rotor shaft 7 projecting upward from an upper end surface of the rotor main body 8 of the rotor unit 6 and has disposed thereon a plurality of terminal plates 12b that are electrically continuous with the coil units 11.
Also, 13 is a circuit board that is integrally screwed onto the base plate 4, and a control circuit, electronic parts, etc., necessary for supplying power to the coil units 11 of the stator assembly 9 via the terminal plates 12b of the motor cover 12 are mounted on the circuit board 13. Also, the circuit board 13 is disposed on the base plate 4 so as to be adjacent to the motor cover 12.

Meanwhile, an output shaft penetrating hole 4e is opened in a positioned manner in the other-side portion 4c of the base plate 4, and an output shaft 14 is penetratingly supported in a rotatable manner via a bearing 14a in the output shaft penetrating hole 4e. As shown in FIGS. 1, 2, and 3, the output shaft 14 has an upper end portion 14b that is an upwardly extending end portion extending upward from the other-side portion 4c of the base plate 4 and internally fitted in a cylindrical portion 3b formed so as to project upward from an upper surface of the cover body 3, and a lower end portion 14c that is a downwardly extending end portion extending downward from the other-side portion 4c of the base plate 4 and internally fitted in a cylindrical portion 2b formed so as to project downward from a lower surface of the case body 2. Also, an axis center portion of an arcuate drive gear 15 is externally fitted and fixed integrally (in an anti-rotation manner) to an upper portion of the lower end portion 14c above the portion internally fitted in the cylindrical portion 2b of the case body 2, and the output shaft 14 thereby forms an axial portion of the drive gear 15 and the drive gear 15 and the output shaft 14 are set to rotate integrally.
The upper end portion 14b of the output shaft 14 that is internally fitted in the cylindrical portion 3b of the cover body 3 is interlockingly connected as an output shaft of the actuator 1 to the unillustrated opening/closing body. In addition, one end and another end of an unillustrated coil spring are respectively connected to the cylindrical portion 2b of the case body 2 and the lower end portion 14c of the output shaft 14 that is internally fitted in the cylindrical portion 2b of the case body 2, and the output shaft 14 is energized in a predetermined rotation direction (direction of opening the opening/closing body) by the coil spring.

Furthermore, a speed reducer is disposed between a lower surface of the base plate 4 and the case body 2 as a motive power transmission path between the rotor shaft 7 and the output shaft 14 (drive gear 15). That is, the respective gear shafts of the first and second reduction gears 16 and 17 that make up the speed reducer are axially supported in a rotatable manner by the case body 2 and the base plate 4 as shown in FIG. 2. Outer peripheral gear teeth 16a of the first reduction gear 16 are meshed with the output gear 7a at the lower end portion of the rotor shaft 7, the gear teeth 16b formed on an outer periphery of the gear shaft of the first reduction gear 16 are meshed with outer peripheral gear teeth 17a of the second reduction gear 17, and gear teeth 17b formed on an outer periphery of the gear shaft of the second reduction gear 17 are meshed with outer peripheral gear teeth 15a of the drive gear 15 of the arcuate shape. In accordance with excitation of the coil unit 10 upon supplying of an external power supply to the stator assembly 9, the rotor unit 6 (rotor shaft 7) rotates to rotate, via the first and second reduction gears 16 and 17, an axial portion of the drive gear 15, in other words, the output shaft 14 forward or in reverse in a speed-reduced state to swingingly open or close the opening/closing body. In this process, the output shaft 14 (drive gear 15) rotates forward or in reverse in a predetermined rotation range (rotation of substantially 90 degrees) to swing the opening/closing body, interlockingly connected to the output shaft 14, in the swinging range of substantially 90 degrees to open or close the front grille.
As mentioned above, the lower end portion 14c of the output shaft 14 is energized in the rotation direction of opening the opening/closing body by the coil spring internally fitted in the cylindrical portion 2b of the case body 2. The opening/closing body is thereby arranged to be forcibly opened in case of an emergency in which the electric motor 5 malfunctions and becomes inoperable. This arrangement can reliably prevent a problem of inability to ventilate due to the front grille being kept in the closed state by the opening/closing body when the electric motor 5 malfunctions.

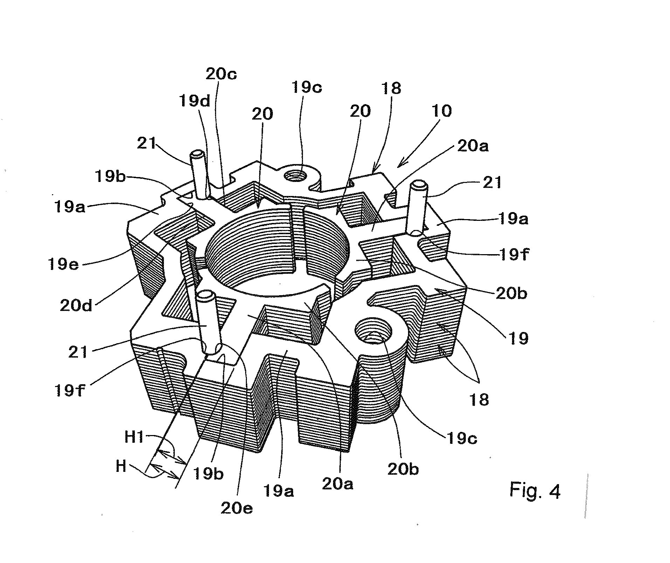

The stator 10 shall now be described in detail based on FIG. 4. The stator 10 is formed by plurally laminating a plurality of metal plate-like stator cores 18 in an axial center direction (vertical direction). Each stator core 18 is arranged as a divided type with which T-shaped portions 20 are individually divided with respect to an annular fixed portion 19 and, in the present embodiment, includes three T-shaped portions 20 so as to form three slots.
The annularly formed fixed portion 19 has T-shaped portion receiving pieces 19a formed at three locations spaced at equal intervals in a circumferential direction, and a recessed groove 19b of rectangular shape that is recessed toward an outer radial direction is formed in an inner radial side edge portion of each tee receiving piece 19a. Also, screw fixing penetrating holes 19c, for fixing the stator 10 to the base plate 4, are opened in two locations in the circumferential direction of the fixed portion 19.
Meanwhile, each T-shaped portion 20 is formed to a T-shape by a leg piece 20a extending in a radial direction and an arcuate T-shaped portion bar piece 20b extending along the circumferential direction from an inner radial side end portion of the leg piece 20a. Outer radial side end portions (corresponding to base end portions of the present invention) of the leg pieces 20a of the T-shaped portions 20 are abuttingly fitted to (fitted into) the recessed grooves 19b formed at the inner radial sides of the fixed portions 19 to form the stator cores 18.

Here, a pair of side pieces 19d and 19e facing each other in the circumferential direction of the fixed portion 19 are formed by each recessed groove 19b being recessed from the inner radial side to the outer radial side of the fixed portion 19 so that a groove bottom is disposed at the outer radial side of the fixed portion 19b. A facing interval H of the pair of side pieces 19d and 19e is dimensionally set to be slightly longer than a facing interval H1 of a pair of side pieces 20c and 20d of the leg piece 20a that face each other in the circumferential direction (H>H1). Thus, when the base end portions of the leg pieces 20a are fitted in the recessed grooves 19b, a loosely fitting state is realized in which a slight gap is formed extending in a radial direction between the recessed grooves 19b and the base end portions of the leg pieces 20a, and a work of fitting the base end portions of the leg pieces 20a to the recessed grooves 19b is thereby facilitated. Furthermore, the side piece 19d, at one side in the circumferential direction of the recessed groove 19b, and the base end portion of the side piece 20c, at one side in the circumferential direction of the leg piece 20 facing the side piece 19d, make up a fitting portion of the recessed groove 19b and the leg piece 20a and have semicircular notches 19f and 20e respectively formed therein and when fitting is performed in the state of abutting the side pieces 19d and 20c against each other and the side pieces 19e and 20d against each other, mutually abutted portions of the notches 19f and 20e form a substantially circular shape. The notches 19f and 20e are respectively formed at positions of equal distance from a center of the side pieces 19d and 20c at the same sides (i.e. facing each other) in the circumferential direction of the recessed groove 19b of the fixed portion 19 and the leg portion 20a of the T-shaped portion 20.

The mutually facing notches 19f and 20e are arranged to mutually form cylindrical holes communicating in the axial center direction by the fixed portions 19 being put in the plurally laminated state, the T-shaped portions 20 being put in the plurally laminated state, and the base end portions of the laminated leg pieces 20a being fitted to the laminated recessed groove portions 19b. In this state, by penetratingly press-fitting fixing pins 21 of round bar forms with outer diameters slightly greater than the diameters of the cylindrical holes (19f, 20e) into the cylindrical holes, the slight gaps extending in the radial directions that are formed between the recessed grooves 19b and the base end portions of the leg pieces 20a are eliminated via the fixing pins 21 to achieve an integrally connected state without play between the recessed grooves 19b and the base end portions of the leg pieces 20a.
Although in the integrated state, each fitting portion has a gap, corresponding to the difference between the facing interval H of the recessed groove 19b and the facing interval H1 of the leg piece 20a, formed between the side pieces 19d and 20c at the one side in the circumferential direction that is the side at which the fixing pin 21 is press-fitted (the side at which the notches 19f and 20e are formed), at the opposite side, that is, with the side piece 19e at the other side in circumferential direction of the recessed groove 19b and the base end portion of the side piece 20d at the other side in circumferential direction of the leg piece 20a, the side pieces 19e and 20d are mutually pressure-welded and the T-shaped portion 20 and the fixed portion 19 form a magnetic path via this pressure-welded portion, thereby preventing a problem of the magnetic path formed by the fixed portions 19 and the T-shaped portions 20 being interrupted and making the magnetic path formed in the stator 10 non-uniform in the circumferential direction.

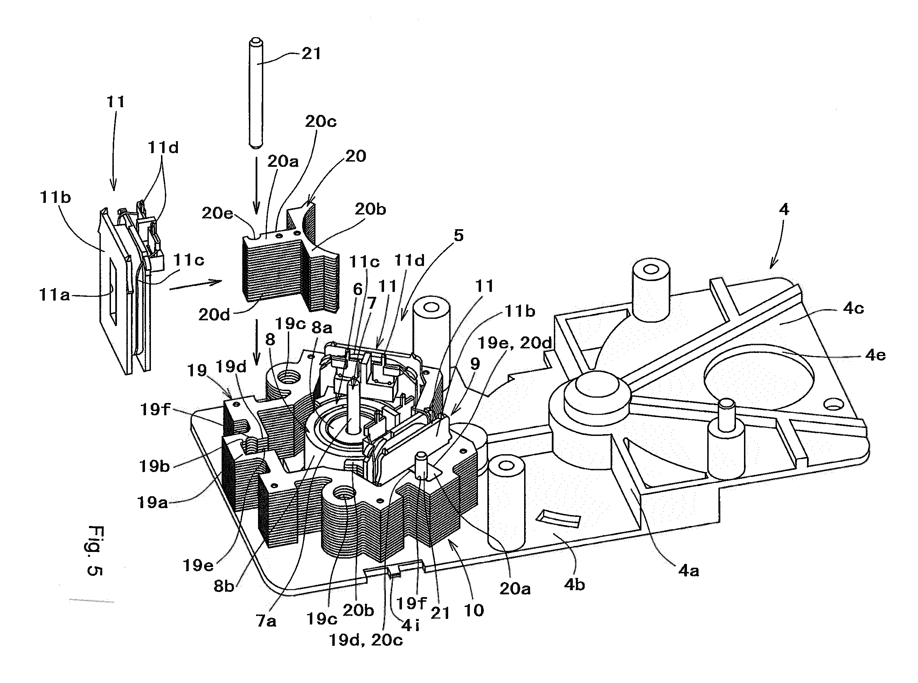

Each of the three coil units 11 assembled into the stator 10 is externally fitted onto the leg portions 20a of the plurally laminated T-shaped portions 20. As shown in FIG. 5, each coil unit 11 includes a coil bobbin 11b having opened therein a penetrating hole 11a capable of being externally fitted onto the plurally laminated leg portions 20a, a winding 11c wound around an outer periphery of the coil bobbin 11b, and a pair of terminals 11d electrically continuous with a winding starting end and a winding ending end of the winding 11c. The coil bobbin 11b is assembled onto the leg portions 20a of the T-shaped portions 20 in advance in a stage prior to fitting (assembling) of the T-shaped portions 20 to the fixed portions 19 as shall be described later.

Next, a procedure for assembling the actuator 1 shall be described. First, the lower end portion of the rotor shaft 7 of the rotor unit 6 that makes up the electric motor 5 is axially supported via the bearing in the rotor shaft penetrating hole 4d opened in the positioned manner in the one-side portion 4b of the base plate 4. The stator assembly 9 is then assembled onto the base plate 4 and as shown in the exploded perspective view of FIG. 3, in the base plate 4, screw holes 4f, communicating with the screw fixing penetrating holes 19c opened in the stator cores 18 (fixed portions 19), are opened at two locations in the circumferential direction and coil insertion penetrating holes 4g, through which lower end portions of the coil bobbins 11b of the coil units 11 penetrate in a loosely fitting manner, are opened at three locations in the circumferential direction. Furthermore, pin supporting penetrating holes 4h, which are formed to substantially the same diameter as the fixing pins 21, communicate with the notches 19f and 20e formed in the fitting portions of the fixed portions 19 and the T-shaped portions 20 laminated to form the stator 10, and are penetrated through in a positioned manner by ends of the fixing pins 21 that are press-fitted into the notches 19f and 20e, are opened at three locations in the circumferential direction in the base plate 4. The screw holes 4f, the coil insertion penetrating holes 4g, and the pin supporting penetrating holes 4h are respectively opened in advance in portions of the base plate 4 in states of being positioned around and relative to the rotor shaft penetrating hole 4d.

In assembling the stator assembly 9, first, the leg pieces 20a of the T-shaped portions 20 are inserted through the penetrating holes 11a of the coil units 11. Then in the state where the leg pieces 20a of the T-shaped portions 20 are inserted in the coil units 11, assembly is performed so as to fit the leg pieces 20a of the T-shaped portions 20 to the recessed grooves 19b of the fixed portions 19. At this point, gaps, though slight, are present extending in the radial directions in the fitting portions of the fixed portions 19 and the T-shaped portions 20 as mentioned above and the fitting can thus be performed readily.
Then as mentioned above, the fixing pins 21 are press-fitted between the respective notches 19f and 20e of the fixed portions 19 and the T-shaped portions 20 in the fitted state to form the stator assembly 9 in which the fixed portions 19 and the T-shaped portions 20 are integrally assembled in a mutually positioned state.
Next, the thus formed stator assembly 9 is set on the base plate 4, and at this point, the fixing pins 21 are inserted in the pin supporting penetrating holes 4h of the base plate 4 so that the stator assembly 9 is provisionally held in a positioned manner with respect to the base plate 4. The coil units 11 (coil bobbins 11b) are disposed so that, in the state where the stator assembly 9 is assembled onto the base plate 4, the lower end portions are inserted through the coil insertion penetrating holes 4g of the base plate 4 and reach a lower side of the base plate 4. Furthermore, the cylindrical notches 19f and 20e formed at the fitting portions of the fixed portions 19 and the T-shaped portions 20 as described above are in a state of communicating with the pin penetrating holes 4h of the base plate 4, and the screw fixing penetrating holes 19c of the fixed portions 19 are in a state of communicating with the screw holes 4f of the base plate 4. Thus by press-fitting the fixing pins 21 into the cylindrical notches 19f and 20e and inserting the press-fitted tips of the fixing pins 21 into the pin supporting penetrating holes 4h of the base plate 4, the stator assembly 9 (stator 10), in which the fixed portions 19 and the T-shaped portions 20 are integrated, is formed and the stator assembly 9 is provisionally held in the positioned state with respect to the base plate 4.

In the state where the stator assembly 9 is provisionally held with respect to the base plate 4, the motor cover 12 is made to cover the stator assembly 9 from above. In this process, the base plate 4, the stator assembly 9, and the motor cover 12 can be provisionally held integrally by making the upper end portion 7b of the rotor shaft 7 be supported by the rotor shaft supporting portion 12a of the motor cover 12, putting the terminals 11d of the coil units 11 and terminal plates 12b provided on the motor cover 12 in a state of being connected, and latching motor cover latching projections 12d formed on the motor cover 12 to base plate latch receiving pieces 4i formed on the base plate 4. By then inserting through bolts 22 via penetrating holes 12c opened in the motor cover 12, the screw fixing penetrating holes 19c of the fixed portions 19, and the screw holes 4f of the base plate 4 and screwing the bolts onto unillustrated fixed portions provided on the case body 2, the motor cover 12, the stator assembly 9, and the base plate 4 are fixed in a positioned manner to the case body 2.
In this state where the electric motor 5 is arranged by assembling the rotor unit 6 and the stator assembly 9 onto the base plate 4, the rotor unit 6 is positioned by the rotor shaft 7 being axially supported by the rotor shaft penetrating hole 4e of the base plate 4 and the stator assembly 9 is positioned by the fixing pins 21 being inserted in the pin supporting penetrating holes 4h of the base plate 4. The rotor unit 6 and the stator assembly 9 are thereby assembled to the base plate 4 with good axial center precision to provide the electric motor 5 with excellent motor characteristics.

After the assembly of the electric motor 5, the circuit board 13 is fixed by screwing to the base plate 4 and the output shaft 14, on which the drive gear 15 is disposed, is made to be axially supported in the output shaft penetrating hole 4e opened in the positioned manner in the other portion 4c of the base plate 4. The base plate 4, onto which the electric motor 5 and the output shaft 14 have been assembled, is then assembled onto the case body 2, which has been provisionally assembled with the first and second reduction gears 16 and 17 in appropriately meshed states, to mesh the output gear 7a of the rotor shaft 7 with the gear teeth 16a on the outer periphery of the first reduction gear 16 and mesh the gear teeth 15a on the outer periphery of the drive gear 15 of the output shaft 14 with the gear teeth 17b on the outer periphery of the gear shaft of the second reduction gear 17, and the cover body 3 is assembled via a sealing member 3c onto the case body 2 to form the actuator 1.

With the present embodiment arranged as described above, the stator 10 that makes up the electric motor 5 is arranged using the plurality of plate-like stator cores 18 and each stator core 18 is made up of the annular fixed portion 19 and the T-shaped portions 20 each formed to the T-shape by the leg piece 20a and the T-shaped portion bar piece 20b. The stator cores 18 are then constructed by fitting the base end portions of the leg pieces 20a of the T-shaped portions 20 to the plurality of recessed grooves 19b that are recessedly formed in the fixed portions 19, and here, the notches 19f and 20e that become circular in shape by the fitting are respectively formed between the recessed grooves 19b and the base end portions of the leg pieces 20a that are the fitting portions of the fixed portions 19 and the T-shaped portions 20, and the fixed portions 19 and the T-shaped portions 20 are integrated without play by press-fitting, into the notches 19f and 20e that become communicating cylindrical holes by the fixed portions 19 and the T-shaped portions 20 being plurally laminated and fitted together, the fixing pins 21 having the outer diameters slightly larger than the diameters of the cylindrical holes. Consequently, the base end portions of the leg pieces 20a can be fitted to the recessed grooves 19b in a loosely fitted state so that even though the stator 10 is of a divided type, the work of fitting T-shaped portions 20 to the fixed portions 19 can be performed easily, thereby enabling the stator assembly 9 to be formed with good workability and a contribution to be made to cost reduction.

Thus with this arrangement, the stator 10 can be formed with good workability by fitting together the fixed portions 19 and the T-shaped portions 20 and integrating the fixed portions 19 and the T-shaped portions 20 by press-fitting the fixing pins 21 into the notches 19f and 20e formed in the fitting portions, and in this arrangement, the fitting portions are arranged by the recessed grooves 19b of the fixed portions 19 and the base end portions of the leg pieces 20a of the T-shaped portions 20 and the pair of side pieces 19d and 19e facing each other in the circumferential direction of each recessed groove 19b are abutted against the pair of side pieces 20c and 20d in the circumferential direction of the base end portion of a leg piece 20a. The notches 19f and 20e are respectively formed in the side pieces 19d and 20c that are positioned at one side (i.e. facing each other) in the circumferential direction, and when the fixing pin 21 is press-fitted into the notches 19f and 20e that have been made cylindrical in form, although slight gaps are formed between the side pieces 19d and 20c at the fixing pin 21 press-fitted side at one side in the circumferential direction, the other side pieces 19e and 20d are put in the pressure-welded state. Consequently, connection of the fixed portions 19 and the T-shaped portions 20 is secured and the problem of the magnetic path formed in the stator 10 being interrupted and compromised between the fixed portions 19 and the T-shaped portions 20 that are the division portions is prevented to realize the electric motor 5 (stator assembly 9) of high reliability.

Further with the present arrangement, the stator 10 (stator assembly 9) is supported by the flat plate-like base plate 4, and the stator 10 can be readily assembled onto the base plate 4 in the positioned state to simplify the assembly work because the pin supporting penetrating holes 4h, in which the press-fitted ends of the press-fitted fixing pins 21 are penetratingly supported, are opened at three locations in the circumferential direction in the base plate 4. Here, the fixing pins 21 function as members that integrate the divided fixed portions 19 and the T-shaped portions 20 and can also function as members that position the stator 10 with respect to the base plate 4, thereby enabling shared use of members.

In addition, with the present arrangement, the rotor shaft penetrating hole 4d for axially supporting the rotor shaft 7 that makes up the rotor unit 6 of the electric motor 5 is opened in the base plate 4 so that not only is the positioning of the rotor unit 6 easy but the pin supporting penetrating holes 4h that fix the stator assembly 9 in a provisionally held manner and the screw holes 4f for screwingly attaching the stator assembly 9 to the base plate 4 are opened around and relative to the rotor shaft penetrating hole 4d so that the stator assembly 9 can be assembled onto the rotor unit 6 with good axial center precision and in a readily positioned state, thereby not only enabling work of assembling the electric motor 5 to be performed easily but also enabling the electric motor 5 with excellent motor characteristics and high reliability to be provided.

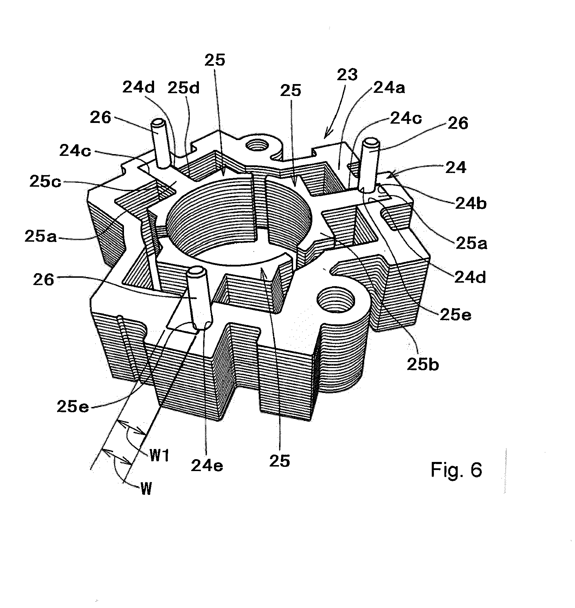

Obviously, the present invention is not limited to the above-described embodiment and may also be put into practice as in a second embodiment shown in FIG. 6.
A stator 23 of the second embodiment is arranged from an annular fixed portion 24 and three T-shaped portions 25, and the fixed portion 24 has T-shaped portion receiving pieces 24a are formed at three locations in a circumferential direction and has a recessed groove 24b of rectangular shape that is recessed in an outer radial direction formed in an inner radial side edge portion of each tee receiving piece 24a. Meanwhile, each T-shaped portion 25 is formed to a T-shape by a leg piece 25a extending in a radial direction and an arcuate T-shaped portion bar piece 25b extending along the circumferential direction from an inner radial side end of the leg piece 25a.
Basic arrangements, such as each stator 23 being arranged by a base end portion of the leg piece 25a of the T-shaped portion 25 being fitted to the recessed groove 24b of the fixed portion 24, dimensions being set so that when the fitting is performed, a facing interval W of a pair of side pieces 24c and 24d of the recessed groove 24b facing each other in the circumferential direction is slightly longer than a facing interval W1 of a pair of side pieces 25c and 25d of the leg piece 25a facing each other in the circumferential direction (W>W1), notches 24e and 25e that become circular in shape upon performing the fitting being formed at the fitting portion, by the mutually facing notches 24e and 25e mutually forming cylindrical holes communicating in an axial center direction by fitting of the base end portions of the laminated leg pieces 25a to the plurally laminated recessed groove portions 24b, and the recessed grooves 24b and the base end portions of the leg pieces 25a being put in an integrally connected state without play by press-fitting of fixing pins 26, each of round bar form with an outer diameter slightly greater than a diameter of each cylindrical hole, into the cylindrical holes, etc., are arranged in the same manner as in the first embodiment described above.

In the stator 10 of the first embodiment, each fixing pin 21 is press-fitted into the notches 19f and 20e formed in the side pieces 19d and 20c at one side among the pair of side pieces 19d and 20c and the pair of side pieces 19e and 20d facing each other in the circumferential direction, that is, formed in the same circumferential direction in the fitting portions of the fixed portion recessed grooves 19b and the base end portions of the T-shaped portion leg pieces 20a, and the magnetic path passing through the fixed portions 19 and the T-shaped portions 20 is thereby formed to be the same in the circumferential direction. Thus in the first embodiment, the electric motor 5 is arranged to be lowered in cogging torque.
On the other hand, with the stator 23 of the second embodiment, the fixing pins 26 are press-fitted into the notches 24e and 25e formed in the side pieces 24c and 25c in the same circumferential direction at two locations in the circumferential direction and press-fitted in the notches 24e and 25e formed in the side pieces 24d and 25d at an opposite side of the side pieces 24c and 25c at one location. Thus with the stator 23 arranged as in the second embodiment, the magnetic path passing through the fixed portions 19 and the T-shaped portions 20 becomes non-uniform in the circumferential direction, and in a case where such a stator 23 is assembled into an electric motor such as that of the first embodiment, the cogging torque can be increased. Thus in a case where a reverse torque is required of the electric motor, the reverse torque can be generated effectively by using the stator 23 of the second embodiment.

### [Industrial Applicability]

The present invention can be applied to a rotary electric machine for constructing various actuators installed in a vehicle.

### [Description of Symbols]

1: Actuator
2: Case body
3: Cover body
4: Base plate
5: Electric motor
6: Rotor unit
7: Rotor shaft
9: Stator assembly
10: Stator
11: Coil unit
12: Motor cover
14: Output shaft
15: Drive gear
18: Stator core
19: Fixed portion
19b: Recessed groove
19f: Notch
20: T-shaped portion
20a: Leg piece
20e: Notch
21: Fixing pin

## Claims

1. A rotary electric machine comprising a plurality of plate-like stator cores (18) that form a stator (10) of the rotary electric machine and are each constructed from an annular fixed portion (19) and T-shaped portions (20) each comprising a leg piece (20a) and a bar piece (20b), base end portions of the T-shaped portion leg pieces (20a) being fitted in a respective one of a plurality of recessed grooves (19b) recessedly formed in the fixed portion (19), wherein notches (19f, 20e) are respectively located at locations of fitting portions of the fixed portion (19) and the T-shaped portions (20) so as to cooperate to form circular holes in the stator cores (18), a plurality of fixed portions (19) and T-shaped portions (20) are respectively laminated and fitted together in the rotary electric machine so that the circular holes cooperate to form cylindrical holes, the rotary electric machine comprising fixing pins (21) having outer diameters slightly greater than diameters of the cylindrical holes which are push-fitted in the cylindrical holes to integrate the fixed portions (19) and the T-shaped portions (20).

2. The rotary electric machine according to Claim 1, wherein each recessed groove (19a) of the fixed portion (19) making up a fitting portion has a pair of side pieces (19d, 19e) facing each other in a circumferential direction, the side pieces (19d, 19e) are arranged to abuttingly fit to a pair of side pieces (20c, 20d) in the circumferential direction that form the leg piece (20a) of a T-shaped portion (20), the notches (19f, 20e) are located in the respective side pieces at one side in the circumferential direction of the recessed groove (19b) and the leg piece (20a), and the side pieces at the other side in the circumferential direction are arranged to be mutually pressure-welded by the push-fitting of the fixing pin (21) into the cylindrical holes.

3. The rotary electric machine according to Claim 1 or 2, wherein the stator (10) is supported by a flat plate-like housing (4) and pin supporting penetrating holes (4h) allowing penetration and support of end portions of the fixing pins (21) are located in the housing (4).

4. The rotary electric machine according to Claim 3, wherein a rotor shaft penetrating hole (4d) that axially supports a rotor shaft (7) that forms a rotor (6) of the rotary electric machine is located in the housing (4).

5. A method of forming a rotary electric machine comprising the steps of:
constructing a plurality of plate-like stator cores (18) that form a stator (10) of the rotary electric machine from an annular fixed portion (19) and T-shaped portions (20) formed by a leg piece (20a) and a bar piece (20b),
fitting base end portions of the T-shaped portion leg pieces (20a) in a respective one of a plurality of recessed grooves (19b) which are recessedly formed in the fixed portion (19),
forming notches (19f, 20e) at respective locations of fitting portions of the fixed portion (19) and the T-shaped portions (20) that cooperate to form circular holes in the stator cores (18),
respectively laminating and fitting together a plurality of the fixed portions (19) and the T-shaped portions (20) in the rotary electric machine to cause the circular holes to cooperate to form cylindrical holes, and
push-fitting fixing pins (21) having outer diameters slightly greater than diameters of the cylindrical holes into the cylindrical holes to integrate the fixed portions (19) and the T-shaped portions (20).

6. A method of forming a rotary electric machine according to Claim 1, wherein each recessed groove (19b) of the fixed portion (19) making up a fitting portion has a pair of side pieces (19d, 19e) facing each other in a circumferential direction, and the leg piece (20a) of a T-shaped portion (20) has a pair of side pieces (20c, 20d) in the circumferential direction, further comprising the steps of:
abuttingly fitting the pair of side pieces (19d, 19e) of the recessed groove (19b) to the pair of side pieces (20c, 20d) of the leg piece (20a),
forming the notches (19f, 20e) in the respective side pieces at one side in the circumferential direction of the recessed groove (19b) and the leg piece (20a), and
push-fitting the fixing pin (21) into the cylindrical holes to mutually pressure-weld the side pieces in the other side in the circumferential direction.

7. A method of forming a rotary electric machine according to Claim 1 or 2, further comprising the steps of:
supporting the stator (10) by a flat plate-like housing (4), and
opening in the housing (4) pin supporting penetrating holes (4h) allowing penetration and support of end portions of the fixing pins (21).

8. A method of forming a rotary electric machine according to Claim 3, further comprising the step of:
opening in the housing (4) a rotor shaft penetrating hole (4d) that axially supports a rotor shaft (7) that forms a rotor (6) of the rotary electric machine.
